# EUROPEAN PATENT APPLICATION

(11) **EP 1 395 049 A1**
(43) Date of publication of application: **03.03.2004**
(21) Application number: 02019194.6
(22) Date of filing: 02.09.2002
(51) Int. Cl.: H04N 5/74, G02B 5/18, G02B 5/30

(54) **Illumination unit for a projection system**

(71) Applicant: Sony International (Europe) GmbH, 10785 Berlin (DE)
(72) Inventor: Teijido, Juan Manuel Adv. Tech. Center Stuttgart,, Heinrich-Hertz-Str. 1, 70327 Stuttgart (DE); Bohley, Christian Institut de Microtechnique, 2000 Neuchatel (CH); Sharf, Toralf Institut de Microtechnique, 2000 Neuchatel (CH)
(74) Representative: Müller - Hoffmann & Partner

(57) **Abstract**

An illumination unit is suggested in which at least one light selecting element (20) is disposed between and assigned to a primary illumination light providing portion (10) and a secondary illumination light providing portion (30). Said light selecting element (20) is simultaneously adapted to select one or a plurality of predefined spectral components (B) or of one and/or a plurality of predefined polarization components from incident primary illumination light (L1) and to thereby generate secondary illumination light (L2) to be irradiated.

## Description

The present invention relates to an illumination unit, and in particular to an illumination unit for a projection system or the like.

Nowadays, in many electronic appliances devices are necessary for optically displaying information to an user or an audience. Because of the large variety of different types of electronic appliances having such a display device it became necessary to develop display devices for which only a limited space is available. Known illumination units for display devices comprise several elements for selecting different spectral components of produced or received primary illumination light and for selecting different polarization components contained in said primary illumination light. Therefore, prior art illumination units have the disadvantage of occupying a considerable large amount of space due to the multiplicity of different elements for selecting different spectral and/or polarization components.

It is an object of the present invention to provide an illumination unit, in particular for a projection system, which is capable of selecting from produced or inciding primary illumination light distinct spectral components or colors and distinct polarization components in a particular reliable manner and which, at the same time, occupies a comparable limited space.

The object is achieved by an illumination unit according to claim 1. Preferred embodiments of the inventive illumination unit are within the scope of the dependent sub claims.

The illumination unit according to the present invention comprises at least one primary illumination light providing portion which is adapted for providing primary illumination light. Further, at least one secondary illumination light providing portion is comprised which is adapted for providing secondary illumination light derived from said primary illumination light. Additionally, at least one light selecting element is provided which is disposed between and assigned to said primary illumination light providing portion and said secondary illumination light providing portion. Said at least one selecting element is simultaneously adapted to select one and/or a plurality of predefined spectral components or colors of one or of a plurality of predefined polarization components from said primary illumination light and to thereby generate said secondary illumination light or a preform or a part thereof.

It is therefore a basic idea of the present invention to provide at least one light selecting element which is adapted to function simultaneously as a means for selecting one or a plurality of predefined spectral components or to select one or a plurality of predefined colors of inciding primary illumination light and to select one or a plurality of predefined polarization components of said primary illumination light. Consequently, by combining both said selectivities with respect to the spectral components and with respect to the polarization components in one device, the illumination unit according to the present invention occupies less space compared to prior art illumination units which employ different means or devices for selecting spectral components or colors on the one hand and for selecting polarization components on the other hand.

According to a preferred embodiment of the inventive illumination unit said light selecting element is provided with dichroic spectral selection properties or with dichroic color selection properties. In particular, these selection properties are realized in reflexion and/or in transmission of inciding primary illumination light.

According to a further aspect of the present invention said light selecting element is provided with polarization selection properties and in particular with diffractive polarization selection properties. Again, these polarization selection properties may be realized in reflexion and/or in transmission of inciding primary illumination light.

According to an advantageous embodiment of the present invention, said light selecting element is or is adapted to work as a diffractive dichroic beam splitter. According to this measure both, the dichroic spectral selection properties and the polarization selection properties and in particular the diffractive polarization selection properties are simultaneously realized in the invention.

With respect to the polarization selection properties said light selecting element is in accordance with a further preferred embodiment of the present invention capable of reflecting or transmitting s-polarized components of inciding primary illumination light and/or of transmitting or reflecting p-polarized components of inciding primary illumination light. This principle may also be generalized, in which case a given polarization component of inciding primary illumination light may be reflected or transmitted and a complement of the inciding primary illumination light with respect to the given polarization components are transmitted and reflected respectively.

Accordingly, said light selecting element is capable of reflecting or transmitting said predefined spectral components or colors of inciding primary illumination light and/or of transmitting or reflecting complements of said predefined spectral components or colors of said inciding primary illumination light.

According to the last measures, inciding primary illumination light may be split up in complementary components with respect to the spectral and the polarization properties of inciding primary illumination light.

To realize polarization selection properties and in particular the diffractive polarization selecting properties said light selecting element may comprise a diffractive grating structure which is adapted to act as a diffractive beam splitter device for inciding primary illumination light and in particular for at least one spectral range or color thereof.

In a preferred embodiment of the present invention said diffractive grating structure comprises at least a grating bulk material, in particular having or forming a first or light incidence surface or face.

Additionally, said grating bulk material may be provided with an alternating sequence of concave areas or recesses and convex areas or protrusions. The concave areas and convex areas may in particular be formed in or on said first or light incidence face or surface of said grating bulk material, so as to form grating line elements of said diffractive grating structure.

Alternatively, said grating bulk material may be provided with a sequence of embedded material portions, so as to form grating line elements of said diffractive grating structure.

Additionally or alternatively, said convex areas or protrusions, said concave areas or recesses and/or said embedded material portions are respectively essentially identical, have a essential linear extension and/or are disposed equally spaced and parallely to each other.

Preferably, said concave areas or recesses of said grating bulk material and/or said embedded material portions are filled with a filling material.
Preferably, said filling material has a diffraction index which is different from a diffraction index of said grating bulk material.

It is of a further advantage to provide said grating bulk material as or comprised of a plurality of layers.

To realize the dichroic spectral selectivity properties said light selecting element may comprise a dichroic multilayer structure which is adapted to act as a dichroic spectral filter device for incident primary illumination light.

According to a preferred embodiment of the present invention said dichroic multilayer structure is or comprises an alternating sequence of at least a first layer material and a second layer material, said first and second layer materials in particular having different diffraction indices.

Further preferably, said dichroic multilayer structure and/or said at least first and second layer materials thereof extend essentially in the plane of said first or light incidence face or surface, in particular parallely thereto.

To combine the dichroic color selection properties and the diffractive polarization selection properties said dichroic multilayer structure at least in part forms at least a part of said grating bulk material.

Consequently, at least a part of said concave areas or recesses, of said convex areas or protrusions and/or of said embedded material portions may be formed in said dichroic multilayer structure.

These and further aspects of the present invention will be more elucidated taking into account the following remarks:

Polymer based polarizers used in projectors work by absorbing the unwished polarization. The high level of incident energy produces a deterioration of the polarizers extinction ratio. This leads to the reduction of the optical performance of the projector (reduced contrast), or in other words, to a reduced lifetime of the device.

Diffractive polarizers reflect and transmit the two polarization components. Due to the low level of absorbed energy, they are much less sensitive to high incident energy. Moreover they are not composed of organic material and are therefore intrinsically more resistant to radiation. Commercially diffractive polarizers present the drawback to be more expensive than polymer based polarizers.

The proposed diffractive dichroic polarizing beam splitters combine the polarization property of diffractive polarizers with the color separation generated by dichroic beam splitters. The combination of the two functionalities within one single element leads to potentially compacter and cheaper projectors.

The proposal according to the present invention consists in using a single component which fulfils the function of polarizer and dichroic beam splitter. This dichroic polarizing beam splitter can therefore substitute two components for instance used in three-color-path projector.

The dichroic polarizing beam splitter combines the two effects of a polarization beam splitter and of a color filter.

### Diffractive polarization beam splitter (PBS):

The light incident on the diffractive polarizers with a typical angle of 45 ± 15° is separated into two components. E.g. the s-polarization is reflected with an angle of -45 ± 15° (total deflection of 90°). E.g. the p-polarization is passed through the polarizer.

Traditionally, the diffractive polarizers are made of a metallic grid (e.g. Aluminum) whose spatial frequency is high enough such as only the 0-orders are transmitted (p-polarization) and reflected (s-polarization). The typical period for diffractive PBS working in the visible is 150 nm.

### Dichroic color filters:

Band-pass filters reflect the light falling in a selected wavelength range and transmit other wavelengths. In the three-pass projector the dichroic filters work at 45°. Actually band-pass filters are interference filters made of a stack of thin films having different indices of refraction (for example n1 = 1.38, n2 = 2.30).

The thickness and number of the respective layers is chosen in function of the researched band-pass characteristics.

### Inventive dichroic diffractive beam splitter:

The proposed approached combines the effect of the diffractive polarizer and the band-pass filter. The dichroic polarizing beam splitter reflects the s-polarization component of one color (for example blue); the other colors and the p-polarization component of the selected color are transmitted.

It should be noted that the materials used in the thin film stack of the dichroic polarizers can be the same as for the corresponding band-pass filter; the number of layers and their respective thickness are changed however.

The choice of the thin film materials may vary. The selection will be done in function of their refractive indices (a significant difference between n1 and n2 is desired) and their manufacturing properties (comparable etching speed). The number of layers and their respective thickness is chosen in function of the selected materials and the band-pass specifications.

### Design example :

In a design for a dichroic polarizing beam splitter for the blue channel of a three-color-path projector the choice of the materials, of the number of layers and of the thicknesses of the different layers may be given as in the following table:

| Layer | Refractive index | Thickness of each layer |
|---|---|---|
| Air | 1.0 | massive |
| Ta₂O₅ | 2.09 | 51 nm |
| MgF₂ | 1.38 | 87 nm |
| Ta₂O₅ | 2.09 | 64 nm |
| MgF₂ | 1.38 | 102 nm |
| Ta₂O₅ | 2.09 | 69 nm |
| MgF₂ | 1.38 | 102 nm |
| Ta₂O₅ | 2.09 | 64 nm |
| MgF₂ | 1.38 | 87 nm |
| Ta₂O₅ | 2.09 | 52 nm |
| Glass | 1.5 | massive |

The design for a dichroic polarizing beam splitter and in particular the choice of the materials, of the number of layers and of the respective thicknesses of the different layers may be may chosen and/or varied according to the desired spectral and polarization selection properties of the inventive light selection element.

In the following the invention will be described in more detail taking reference to the accompanying figures.
- **Fig. 1**: is a schematical and cross-sectional side view of a first embodiment of the inventive illumination unit.
- **Fig. 2**: is a schematical and cross-sectional side view of another preferred embodiment of the inventive illumination unit.
- **Fig. 3**: is a schematical and cross-sectional side view explaining the principle of diffractive beam splitter devices.
- **Fig. 4**: is a schematical and cross-sectional side view explaining the principle of a dichroic color selection filter.
- **Fig. 5**: is a schematical and cross-sectional side view of a conventional illumination unit.

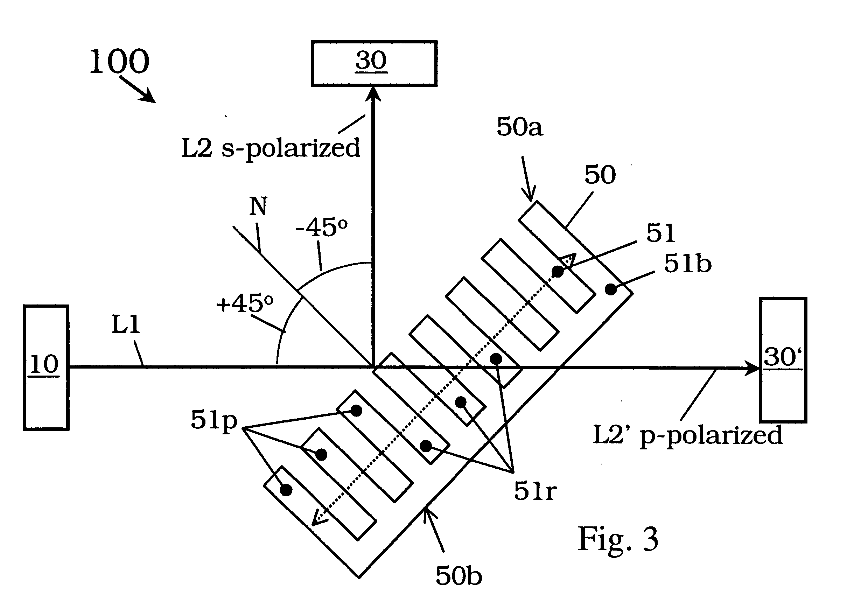

Before explaining in detail the inventive principle of the dichroic diffractive beam splitter, reference is taken to Figs. 3 to 5 for explaining the principles of radiation selection known in the art.

Fig. 3 is a schematical and cross-sectional side view of a prior art illumination unit 100 involving a prior art diffractive polarization beam splitter 50 having a first or light incidence face or surface 50a and an opposite face or surface 50b and comprising a bulk material portion 51b. Said bulk material portion 51b is provided with an alternating sequence of a plurality of convex areas or protrusions 51p and concave areas or recesses 51r so as to form a grating structure 51 in the region of the first or light incidence face or surface 50a. Thereby, the alternating sequence of convex and concave areas 51p, 51r forms a sequence of grating lines or grating line elements 52.

Additionally, the prior art illumination 100 comprises a primary illumination light providing portion 10 for providing primary illumination light L1 inciding said first or light incidence face or surface 50a of the prior art light selecting element 50 or the prior art diffractive polarization beam splitter 50. Said primary illumination light providing portion 10 may be capable of generating said primary illumination light, and it may therefore be or comprise a light emitting device, for instance a lamp, a laser device, a light emitting diode device and/or the like.

Due to the interaction of the inciding primary illumination light L1 with the grating structure 51 of the prior art diffractive polarization beam splitter 50 said primary illumination light L1 is split up into a first and reflected beam of secondary illumination light L2 consisting of first polarization components or s-polarizations being irradiated towards a provided secondary illumination light providing portion 30. Additionally, a complement of said secondary illumination light L2 with respect to the primary illumination light L1 is transmitted as complementary secondary illumination light L2' and is irradiated towards a complementary secondary illumination light providing portion 30'. In the case of Fig. 3 said complementary secondary illumination light L2' consists of the p-polarization components of the inciding primary illumination light L1.

In the case of Fig. 3 primary illumination light beam L1 is inciding the grating structure 51 of the prior art light selecting element 50 at an angle of incidence of 45° with respect to the normal N of the first or light incidence surface or face 50a. Consequently, said beam of secondary illumination light L2 leaves said first or light incidence face or surface 50a of the prior art light selecting element 50 at an angle of -45° with respect to the normal N of the first or light incidence surface or face 50a.

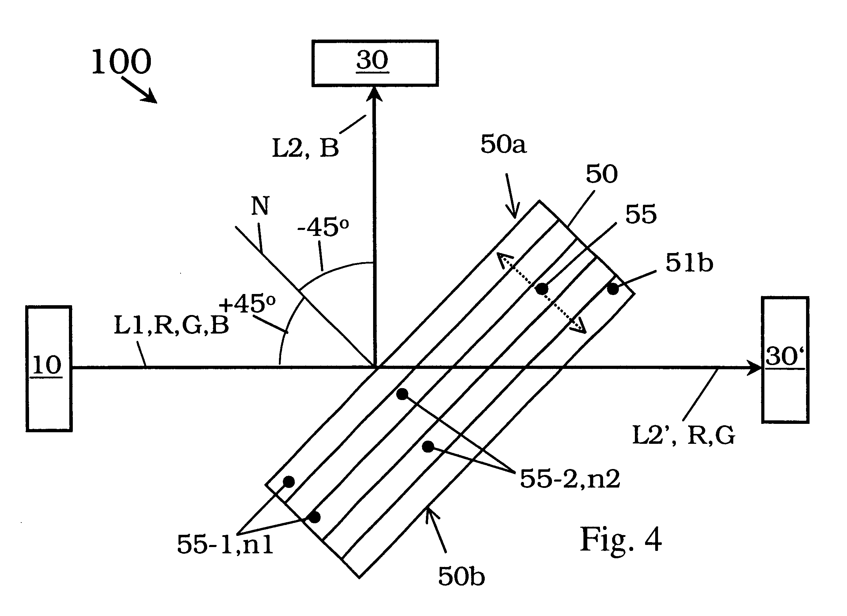

Fig. 4 demonstrates the principle of a dichroic spectral or color filter device known in the art. Elements having similar structures and functionalities compared to the elements of Fig. 3 are indicated with identical reference symbols.

The prior art illumination unit 100 of Fig. 4 comprises as a prior art light selecting element 50 a dichroic spectral or color filter 50 which is built up by a substrate 51b, on a first surface of which a multilayer structure 55 having an alternating sequence of a first layer material 55-1 having a first refraction index n1 and a second layer material 55-2 having a second refraction index n2 which is different from said first refraction index n1. Said multilayer structure 55 builds a first or light incidence face or surface 50a of the prior art light selecting element 50.

A beam of primary illumination light L1 stemming from a primary illumination light providing portion 10 consists of a superposition of different spectral components R, G, and B, which might be referred to as red, green and blue. Due to the interaction of the R-, G- and B-components of the primary illumination light with the respective layers 55-1 and 55-2 of said multilayer structure 55 a distinct spectral component, in the case of Fig. 4 the component B, is reflected under a reflexion angle of -45° with respect to the normal N of the first or light incidence face or surface 50a. This angle is identical to the angle of incidence of 45° with respect to said normal N. Thereby, secondary illumination light L2 is generated and irradiated towards said secondary illumination light providing portion 30. Additionally, complementary secondary illumination light L2' consisting of the remaining spectral components R and G is transmitted through the prior art light selecting element 50 without being deflected or reflected, in particular towards the complementary secondary illumination light providing portion 30' of the prior art illumination unit 100. Thereby, said inciding primary illumination light L1 is split up into distinct and complementary spectral components B on the one hand and R and G on the other hand.

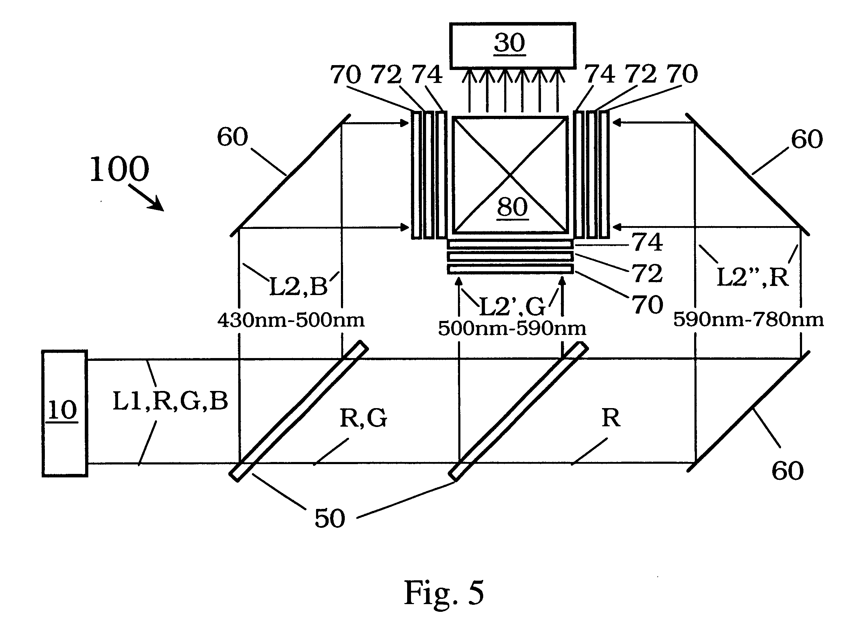

By means of a schematical and cross-sectional side view Fig. 5 demonstrates a further prior art illumination unit 100 in which the prior art structures of Figs. 3 and 4 are multiply involved to realize a prior art three color illumination path.

From a primary illumination light providing portion 10 primary illumination light L1 comprising the spectral components or colors R, G, and B is irradiated to a first dichroic beam splitter 50 having the structure shown in Fig. 4 to be split up into the component B, for instance in the range of 430 nm to 500 nm, being reflected and to the components G and R in the wave length ranges of 500 nm to 590 nm and 590 nm to 780 nm, respectively, which are transmitted without being deflected or reflected by the first light selecting element 50. Both components G and R form first complementary primary illumination L1' with respect to the component B and the primary illumination light L1. Said first complementary primary illumination light L1' is then irradiated to the second dichroic beam splitter or second light selecting element 50 where the components G and R are separated from each other, the first of which being reflected and the second of which being transmitted. The component G thereby forms second secondary illumination light L2' and the component R as a complement of the second secondary illumination light L2' thereby forms third secondary illumination light 2".

The component B is reflected on a first deflection mirror 60 towards a first polarizer 70. After selecting a certain polarization a first LCD-panel 72 is illuminated which functions as a light valve. Component G upon reflection on the second light selecting element 50 is irradiated to a second polarizer 70 and after selecting a certain polarization thereof irradiates a second LCD-panel 72 also acting as a light valve. Component R after being reflected by second and third deflection mirrors 60 enters a third polarizer 70 upon which certain polarization components are extracted to be irradiated to a third LCD-panel 72. After passing said LCD-panels 72 and analyzers 74 the respective polarization components of the spectral components enter an optical mixing element or X-cube 80 where the different spectral components are mixed up and irradiated towards the secondary illumination light providing portion 30 of the prior art embodiment of Fig. 5.

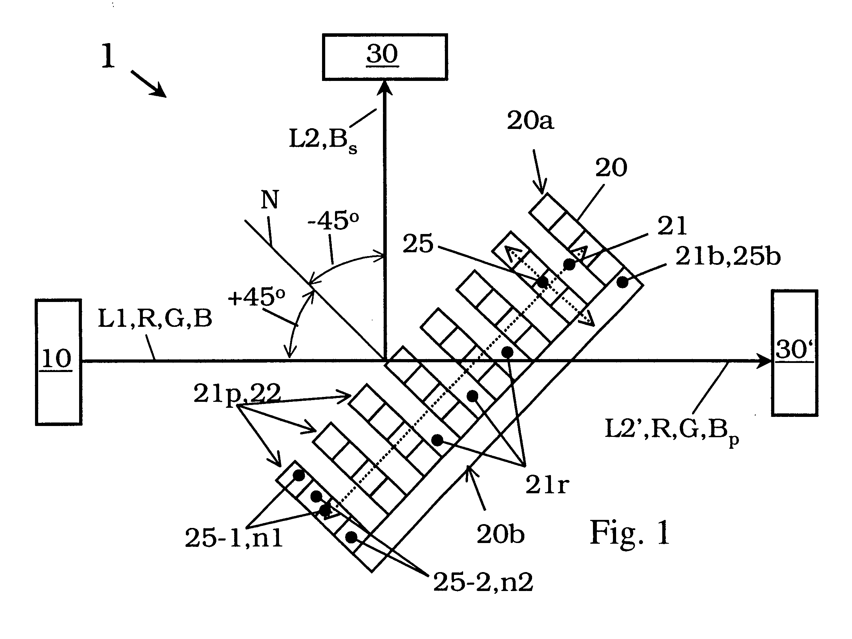

Fig. 1 now demonstrates a first embodiment of an inventive illumination unit 1. This embodiment comprises a primary illumination light providing portion 10 which provides primary illumination light L1 being, e.g., unpolarized and having different spectral components, for instance components R, G, and B. Said primary illumination light L1 is irradiated onto a provided inventive light selecting element 20 at an angle of incidence of 45° with respect to a normal N of a first or light inciding face or surface 50a.

The inventive light selecting element 20 is built up as a combination of the structures shown in Figs. 3 and 4. In particular, the inventive light selecting element 20 is based on a substrate material on which a multilayer structure 25 is built up. Said substrate material and said multilayer structure 25 forms on the one hand a grating bulk material 21b provided with convex areas or protrusions 21p and concave areas or recesses 21r in an alternating sequence fashion, thereby forming a diffractive grating structure 21. Due to the multilayer structure 25 of each of the convex areas or protrusions 21p dichroic spectral or dichroic color selectivity properties are assigned to the grating bulk material 21b as well as diffractive polarization selection properties in accordance to the alternating sequence of protrusions 21p and recesses 21r.

Because of the above given structure of the inventive light selecting element 20 said beam of inciding primary illumination light L1 is split up into different spectral or color components having different polarization characteristics. Thereby, a color selection and a polarization selection is performed in or at the first or light inciding face or surface 20a of the inventive light selecting element 20, simultaneously. Thereby, a component of said unpolarized primary illumination light L1 having components R, G, and B is reflected at an reflexion angle of -45° with respect to the normal N of the first or light inciding face or surface 20a as secondary illumination light L2 and irradiated to a secondary illumination light providing portion 30. Additionally, a complement of said secondary illumination light L2 with respect to said inciding primary illumination light L1 is transmitted without being reflected as said complementary secondary illumination light L2' towards a complementary secondary illumination light providing portion 30'. In the case of Fig. 1 said secondary illumination light L2 consists of an s-polarized B-component and said complementary secondary illumination light L2' consists of the complete components R and G and of the p-polarized B-component of the original primary illumination light L1.

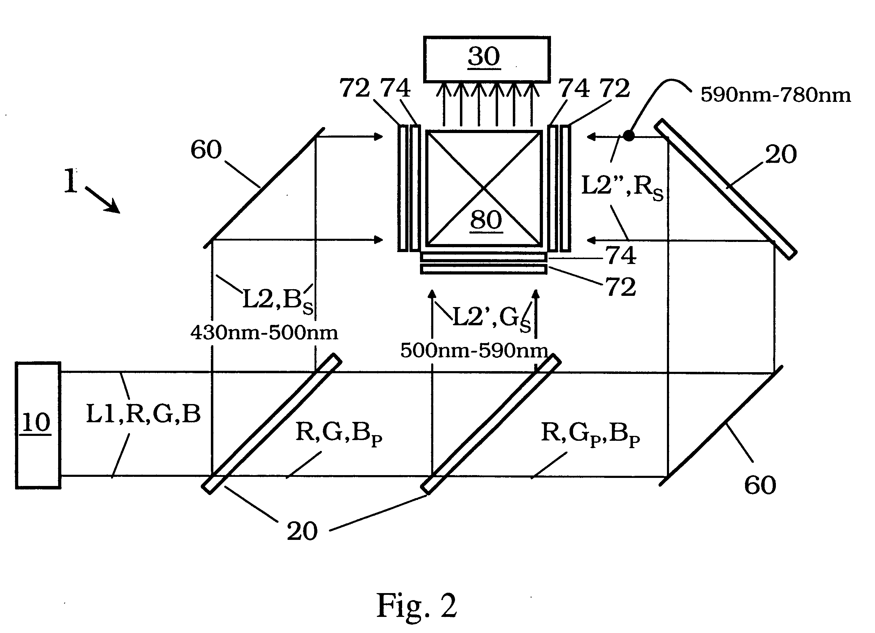

Fig. 2 demonstrates a structure similar to that of Fig. 5 wherein the simultaneous spectral and polarization selection properties of the inventive diffractive dichroic polarization beam splitters 20 are used to realize a simplified structure for building up a three color illumination path according to the present invention.

In contrast to the prior art embodiment of Fig. 5, the inventive light selection element 20 of the inventive embodiment of Fig. 2 simultaneously perform a selection of the inciding primary illumination light L1 with respect to spectral and polarization properties. Therefore, the elements in the optical paths before said light mixing device 80 do not comprise separate diffractive polarization beam splitters or other polarizers, but only LCD-panels 70 and analyzers 74 to build up partial images of the s-polarized R-, G-, and B-components to be combined by the action of said light mixing device 80. The analyzers 74 might be of a diffractive type.

The distinct inventive diffractive dichroic polarization beam splitters 20 or light selecting elements 20 are adapted to select the s-polarized components of the R-, B-, and G-components of inciding primary illumination light L1. Again, elements similar in function and structure are indicated with the same reference symbols as in the above-described figures.

### List of Reference Signs

- 1: Illumination unit
- 10: Primary illumination light providing portion
- 20: Light selecting element, dichroic diffractive beam splitter
- 20a: Light incidence surface
- 20b: Opposite surface
- 21: Diffractive grating structure
- 21b: Grating bulk material
- 21p: Convex area, protrusion
- 21r: Concave area, recess
- 22: Grating line element
- 25: Dichroic multilayer structure
- 25-1: First layer material
- 25-2: Second layer material
- 30: Secondary illumination light providing portion
- 30': Complementary secondary illumination light providing portion
- 50: Prior art light selecting element, dichroic color filter, diffractive beam splitter
- 50a: First or light inciding face or surface
- 50b: Opposite surface
- 51: Diffractive grating structure
- 51b: Substrate, bulk material
- 51p: Convex area, protrusion
- 51r: Concave area, recess
- 55: Multilayer structure
- 55-1: First layer material
- 55-2: Second layer material
- 60: Deflection mirror
- 70: Diffractive polarizing beam splitter
- 72: LCD-panel, light valve
- 74: Diffractive analyzer, light valve
- 80: Light mixing device
- 100: Prior art illumination unit
- n1: Diffraction index
- n2: Diffraction index
- B, Bₛ: Spectral component
- G, Gₛ: Spectral component
- L1: Primary illumination light
- L1': Complementary primary illumination light
- L2: Secondary illumination light
- L2': Second secondary illumination light
- L2": Third secondary illumination light
- N: Normal of light inciding face or surface
- R, Rₛ: Spectral component

## Claims

1. Illumination unit, in particular for a projection system device or the like, comprising:
- at least one primary illumination light providing portion (10) being adapted for providing primary illumination light (L1),
- at least one secondary illumination light providing portion (30) being adapted for providing secondary illumination light (L2) derived from said primary illumination light (L1), and
- at least one light selecting element (20) being disposed between and assigned to said primary illumination light providing portion (10) and said secondary illumination light providing portion (30) and being simultaneously adapted to select one or a plurality of predefined spectral components or colors of one and/or of a plurality of predefined polarization components from said primary illumination light (L1) and to thereby generate said secondary illumination light (L2) or a preform or a part thereof.

2. Illumination unit according to claim 1,
wherein said light selecting element (20) is provided with dichroic spectral selection properties or dichroic color selection properties, in particular in reflexion and/or in transmission of said primary illumination light (L1).

3. Illumination unit according to anyone of the preceding claims,
wherein said light selecting element (20) is provided with polarization selection properties and in particular with diffractive polarization selection properties, in particular in reflexion and/or in transmission of said primary illumination light (L1).

4. Illumination unit according to anyone of the preceding claims,
wherein said light selecting element (20) is or is adapted to work as a diffractive dichroic beam splitter.

5. Illumination unit according to anyone of the preceding claims,
wherein said light selecting element (20) is capable of reflecting or transmitting s-polarized components of inciding primary illumination light (L1) and/or of transmitting or reflecting p-polarized components of inciding primary illumination light (L1).

6. Illumination unit according to anyone of the preceding claims,
wherein said light selecting element (20) is capable of reflecting or transmitting said predefined spectral components or colors of inciding primary illumination light (L1) and/or of transmitting or reflecting complements of said predefined spectral components or colors of said inciding primary illumination light (L1).

7. Illumination unit according to anyone of the preceding claims,
wherein said light selecting element (20) comprises a diffractive grating structure (21) being adapted to act as a diffractive beam splitter device for incident primary illumination light (L1) and in particular for at least one spectral range or color thereof.

8. Illumination unit according to claim 7,
wherein said diffractive grating structure (21) comprises at least a grating bulk material (21b), in particular having or forming a first or light incidence surface (20a) or face.

9. Illumination unit according to claim 8,
wherein said grating bulk material (21b) is provided with an alternating sequence of concave areas or recesses (21r) and convex areas or protrusions (21p), in particular in or on said first or light incidence surface (20a) or face of said grating bulk material (21b), so as to form grating line elements (22) of said diffractive grating structure (21).

10. Illumination unit according to anyone of the claims 8 or 9,
wherein said grating bulk material (21b) is provided with a sequence of embedded material portions, so as to form grating line elements (22) of said diffractive grating structure (21).

11. Illumination unit according to anyone of the claims 9 or 10,
wherein said convex areas or protrusions (21p), said concave areas or recesses (21r) and/or said embedded material portions are respectively essentially identical, have a essentially linear extension and/or are disposed equally spaced and parallely to each other.

12. Illumination unit according to anyone of the claims 9 to 11,
wherein said concave areas or recesses (21r) of said grating bulk material (21b) and/or said embedded material portions are filled with a filling material.

13. Illumination unit according to claim 12,
wherein said filling material has a diffraction index which is different from a diffraction index of said grating bulk material (21b).

14. Illumination unit according to anyone of the claims 8 to 13,
wherein said grating bulk material (21b) is or comprises a plurality of layers.

15. Illumination unit according to anyone of the preceding claims,
wherein said light selecting element (20) comprises a dichroic multilayer structure (25) being adapted to act as a dichroic spectral filter device for incident primary illumination light (L1).

16. Illumination unit according to claim 15,
wherein said dichroic multilayer structure (25) is or comprises an alternating sequence of at least a first layer material (25-1) and a second layer material (25-2), said first and second layer materials (25-1, 25-2) in particular having different refraction indices (n1, n2).

17. Illumination unit according to anyone of the claims 15 or 16,
wherein said dichroic multilayer structure (25) and/or said at least first and second layer materials (25-1, 25-2) thereof extend essentially in the plane of said first or light incidence surface (20a) or face, in particular parallely thereto.

18. Illumination unit according to anyone of the claims 15 to 17,
wherein said dichroic multilayer structure (25) at least in part forms at least a part of said grating bulk material (21b).

19. Illumination unit according to anyone of the claims 15 to 18,
wherein at least a part of said concave areas or recesses (21r), of said convex areas or protrusions (21p) and/or of said embedded material portions (21e) are formed in said dichroic multilayer structure (25).
